Europäisches Patentamt

European Patent Office

Office européen des brevets

(11) Veröffentlichungsnummer: **0 344 322**
A1

# EUROPÄISCHE PATENTANMELDUNG

Veröffentlicht nach Art. 158 Abs. 3 EPÜ

(21) Anmeldenummer: 88909644.2

(22) Anmeldetag: 28.09.88

Daten der zugrundeliegenden internationalen Anmeldung:

(86) Internationale Anmeldenummer:
PCT/SU88/00190

(87) Internationale Veröffentlichungsnummer:
WO89/03972 (05.05.89 89/10)

(51) Int. Cl.³: **G 01 B 11/16**
G 01 B 11/26, G 01 B 15/00

(30) Priorität: 30.10.87 SU 4319015

(43) Veröffentlichungstag der Anmeldung:
06.12.89 Patentblatt 89/49

(84) Benannte Vertragsstaaten:
AT DE FR GB IT NL SE

(71) Anmelder: TSENTRALNY
NAUCHNO-ISSLEDOVATELSKY
GEOLOGORAZVEDOCHNY INSTITUT TSVETNYKH I
BLAGORODNYKH METALLOV (TSNIGRI)
Varshavskoe shosse, 129b
Moscow, 113545(SU)

(72) Erfinder: MIKHEEV, Sergei Mikhailovich
ul. Zelenodolskaya, 17-5-72
Moscow, 109457(SU)

(72) Erfinder: ZEMEROV, Valery Nikolaevich
pr. Vernadskogo, 67-16
Moscow, 117415(SU)

(72) Erfinder: ELSHANSKY, Petr Vasilievich
Volzhsky bulvar, 6-1-17
Moscow, 109518(SU)

(74) Vertreter: Nix, Frank Arnold, Dr.
Kröckelbergstrasse 15
D-6200 Wiesbaden(DE)

(54) REGELVERFAHREN DER BESCHAFFENHEIT EINES VERLÄNGERTEN UMSCHLAGS.

(57) Das Verfahren zur Kontrolle des Zustandes einer langgestreckten Schale besteht darin, dass man die Wellenenergie-Übertragungsleitung (4) als einen Sensor und als einen Kanal zur Übertragung einer Information über die Änderung der Flächengeometrie der langgestreckten Schale (I) anwendet. Dadurch, dass die Oberfläche der Schale (I) in Abschnitte (2) beliebiger Form aufgeteilt ist, deren jeder einen Flächeninhalt hat, der geringer oder gleich dem durch das vorgegebene Auflosungsvermögen der Kontrolle festgelegten Flächeninhalt ist, die lange Wellenenergie-Übertragungsleitung (4) über die Umfänge der ausgewählten Abschnitte (2) hinweg angeordnet und befestigt wird, erhält man durch Messung der Verteilung der Flächenkrummungen längs der Achse dieser Leitung (4) Werte der zwei Hauptkrümmungen der Oberfläche jedes ausgewählten Abschnittes (2). Durch Auswertung der Änderungen der Hauptkrümmungen ermittelt man Charakteristiken des gespannten und verformten Zustandes der Schale (I).

./...

Croydon Printing Company Ltd.

EP 0 344 322 A1

FIG. 1

# VERFAHREN ZUR KONTROLLE DES ZUSTANDES EINER LANGGESTRECKTEN SCHALE

## Anwendungsgebiet der Erfindung

Die vorliegende Erfindung bezieht sich auf die Kontroll- und Messtechnik und betrifft insbesondere Verfahren zur Kontrolle des Zustandes einer langgestreckten Schale.

Als zu prüfende langgestreckte Schalen können z.B. Dächer von Bauwerken, Gehäuse von Maschinen, Flugzeug- und Schiffsrümpfe, Luftballons, Oberflächen von Wasserkraftwehren, Spiegel von Antennen und Radioteleskopen, Erkundungsbaue, künstliche Menschenorgane in Betracht kommen.

## Zugrundeliegender Stand der Technik

Es ist ein Verfahren zur Kontrolle des Zustandes einer langgestreckten zylindrischen Schale, z.B. eines Risers beim Offshore-Boren (AEG-Telefunken, BRD, "Position measuring system for Offshore Installations", "System design and mathematical description", 1980, p. IO) bekannt. Das bekannte Verfahren besteht darin, dass man einen Sensor wählt, der auf Änderungen des zu kontrollierenden Parameters reagiert, insbesondere der Geometrie der Oberfläche einer langgestreckten Schale, welche Geometrie den Zustand dieser Schale kennzeichnet, wobei man eine lange Leitung zur Wellenenergieübertragung wählt, die zur Ubermittlung der Information über Änderungen des zu kontrollierenden Parameters bestimmt ist, den gewählten Sensor und die lange Wellenenergie-Ubertragungsleitung aneinander koppelt und in der Kontrollzone nach einer vorgegebenen Koordinate anordnet, längs der eine Änderung des zu kontrollierenden Parameters erfolgt, der den Zustand des langgestreckten Parameters charakterisiert, worauf ein in der Zeit moduliertes Bezugssignal erzeugt und dem Eingang der langen Wellenenergie-Ubertragungsleitung zugeführt wird, wobei dieses Signal bei seiner Fortpflanzung in der genannten Leitung entsprechend der Änderung des zu kontrollierenden und den Zustand der langgestreckten Schale charakterisierenden Parameters umgeformt wird, und nun die Parameter des umgeformten Bezugssignals am Ausgang der langen Wellenenergie-Ubertragungsleitung gemessen werden, wobei man entsprechend

den gemessenen Parametern des umgeformten Bezugssignals die mechanischen Charakteristiken des Zustandes der langgestreckten Schale nach der vorgegebenen Koordinate bestimmt, längs der der zu kontrollierende Parameter geändert wird. Konkreter werden die Vorgänge des bekannten Verfahrens in der Entwicklungsarbeit der Firma AEG-Telefunken wie folgt verwirklicht.

Als zu kontrollierender Parameter zur Kennzeichnung des Zustandes einer langgestreckten Schale (eines Risers) werden beim bekannten Verfahren die Winkelabweichung der Riserachse von der Vertikalen und die Torsionswinkel des oberen und des unteren Teils des Risers in der Horizontalebene benutzt. Deshalb erfolgt die Wahl von Sensoren auf Grund der Entwicklung von speziellen Gebern, die auf Änderung dieser Winkel reagieren, nämlich von Inertialinklinometern und Magnetkompassen. Dann wird eine lange Wellenenergie-Übertragungsleitung in Form eines abgeschirmten elektrischen Kabels mit Polyäthylen-Schutzhülle gewählt. Die gewählten Geber und das Kabel werden induktiv aneinandergekoppelt und längs der Achse des Risers auf dessen Oberfläche angeordnet. Um eine ausreichende Information über die Geometrie der Längsachse im dreidimensionalen Raum zu gewinnen, werden die Geber zur Erfassung der Abweichung dieser Achse von der Vertikalen an zwei orthogonalen Mantellinien auf der Riseroberfläche angeordnet und befestigt. Dann wird dem Eingang des Kabels ein elektrisches Bezugssignal zugeleitet, das sich in der Zeit mit einer Frequenz von 400 Hz ändert. Bei der Fortpflanzung dieses Signals im Kabel infolge der induktiven Kopplung erfolgt die Speisung der Geber und der Empfang ihrer Information über die Winkel, aber auf einer höheren Frequenz im Vergleich zur Trägerfrequenz von 400 Hz. Am Kabelausgang werden die Parameter des umgeformten Bezugssignals gemessen, diese Information wird entschlüsselt, und aufgrund der Daten über Torsionswinkel und Winkel der Riserachsenabweichung von der Vertikalen ermittelt man die mechanischen Charakteristiken des Riserzustandes. Die so ermittelten Charakteristiken bestimmen eindeutig den gespannten und verformten Zustand des Risers und die gegenseitige Lage seiner äussersten Punkte im Raum für die dynamische Positionierung.

Für das bekannte Verfahren zur Kontrolle des Zustandes einer zylindrischen langgestreckten Schale sind besonders folgende Einschränkungen kennzeichnend.

Mit dem genannten Verfahren lassen sich langgestreckte Schalen mit hoher Auflösung und auf grossen Entfernungen von dem Prüfobjekt infolge begrenzter Informationskapazität der Wellenenergie-Übertragungsleitung sowie wegen sinkender Sicherheit der Informationsübertragung bei grösser werdender Leitungslänge und wegen entsprechend stärkerer Störungen und grösserer Spannungsverluste in dieser Leitung nicht kontrollieren. Die Benutzung von diskret einstellbaren Sensoren in Form von Winkel- und Weggebern bietet im Prinzip keine Möglichkeit, die Verteilung des zu kontrollierenden Parameters ununterbrochen zu messen. Möglich ist dabei nur die Approximation der Parameterverteilung nach den längs der vorgegebenen Koordinate erhaltenen Messwerten, gegebenenfalls nach den Winkeln der Riserachsenabweichung von der Vertikalen. Somit ist die Kontrolle der räumlich und zeitlich kontinuierlichen mechanischen Charakteristiken der Schale prinzipiell unmöglich, was Approximationsfehler mit sich bringt. Darüber hinaus sinkt die Gesamtgenauigkeit der Kontrolle noch wegen bedeutender Fehler der Geber selbst. Die induktive, d.h. elektromechanische Ankopplung des Sensors an die lange Wellenenergie-Übertragungsleitung und die spezielle Befestigungsart des Sensors und der Leitung zwingt zur Aufstellung von in ihrer Wirkungsweise verschiedenen Sensoren und zur Organisation ihrer ziemlich komplizierten Abfrageprozedur, wozu kostspielige elektronische Unterwasserausrüstungen hergestellt und bedient werden müssen, deren Zuverlässigkeit niedrig ist.

Die benutzten Winkelgeber zur Erfassung der Winkel der Mantellinienabweichung des Risers von der Vertikale haben ausserdem einen wesentlich beschränkten dynamischen Messbereich des zu kontrollierenden Winkels und lassen somit keine Kontrolle der Mantelfläche der Riser bei grossen Verformungen zu. Es besteht keine Möglichkeit, mit ein und demselben bekannten Verfahren andere Arten von langgestreckten Schalen zu kontrollieren und das Auflösungsvermögen der Messungen und der Kontrolle zu erhöhen, ohne die Anzahl der Geber zu vergrössern und den Abstand der aufgestellten Geber voneinander zu verkleinern.

Am nächsten kommt der vorliegenden Erfindung nach dem technischen Wesen ein Verfahren zur Kontrolle des Zustandes eines langgestreckten Objektes, das im Einzelfall eine langgestreckte Schale ist (PCT/SU 88/00082). Dieses Verfahren besteht darin, dass eine lange Wellenenergie-Ubertragungsleitung gewählt wird, über die die Fortpflanzung von Signalen in Form von Moden mit bekannter räumlich-zeitlicher Struktur physikalischer Felder gewährleistet wird, die gewählte lange Wellenenergie-Ubertraungsleitung auf der Oberfläche der langgestreckten Schale längs einer vorgegebenen Koordinate S angeordnet wird, in der langen Wellenenergie- -Ubertragungsleitung mindestens ein Bezugssignalkanal und mindestens ein Messkanal mit bekannten Verzögerungszeiten der Modephasengeschwindigkeiten in jedem von diesen Kanälen abgesondert werden, längs der langen Wellenenergie-Ubertragungsleitung eine gerichtete Wechselwirkung der Wellenenergie der Modenfelder mindestens eines Bezugssignalkanals und wenigstens eines Messkanals in Abhängigkeit von der Änderung der Flächengeometrie der langgestreckten Schale gewährleistet wird, um im Messkanal ein Signal zu erhalten, das während der Fortpflanzung des Signals im Bezugssignalkanal entsprechend der Änderung der den Zustand dieser Schale kennzeichnenden Flächengeometrie der langgestreckten Schale geändert wird, das in der Zeit modulierte Bezugssignal als Schwingungen physikalischer Felder gebildet wird, und diese Schwingungen in ein Signal mit vorgegebener räumlich-zeitlicher Struktur der Modenfelder umgeformt werden, die Modenfelder an den Ausgängen mindestens eines Bezugssignalkanals und wenigstens eines Messkanals der langen Wellenenergie-Ubertragungsleitung in elektrische, nur zeitabhängige Signale umgewandelt werden, die Amplitude des elektrischen Signals am Ausgang des Bezugssignalkanals abgetrennt wird, wobei das elektrische Signal am Ausgang des Messkanals umgekehrt proportional der Amplitudengrösse des elektrischen Signals am Ausgang des Bezugssignalkanals verstärkt wird, eine lineare Masstabtransformation benutzt wird, welche die Grösse der Verzögerungszeit-differenz der Modephasengeschwindigkeiten im Bezugssignal-kanal und im Messkanal der langen Wellenenergie-Übertra-gungsleitung mit der laufenden Zeit der Kontrolle und mit der Ablesung der Werte der vorgegebenen Koordinate längs der langen Wellenenergie-Übertragungsleitung verknüpft, und danach die Flächengeometrie der langgestreckten Schale bestimmt wird.

Dem bekannten Verfahren zur Kontrolle des Zustandes einer langgestreckten Schale, welches der vorliegenden Erfindung am nächsten kommt, sind folgende Einschränkungen eigen.

Beim bekannten Verfahren ist bei der Verlegung der langen Wellenenergie-Übertragungsleitung auf der Oberflä-che einer langgestreckten Schale, deren Einzelfall eine gebogene Rohrleitung ist, keine Erhöhung der Genauigkeit bei der Kontrolle der Flächengeometrie der langgestreckten Schale gewährleistet, weil es keine Möglichkeit bietet, die integralen Charakteristiken der Oberfläche der langgestreckten Schale elementeweise zu ermitteln und anschliessend diese Charakteristiken zwecks eindeutiger Bestimmung der Flächengeometrie der langgestreckten Schale und folglich des gespannten und verformten Zustandes derselben zu-sammenzufassen.

Offenbarung der Erfindung

Der Erfindung liegt die Aufgabe zugrunde, ein solches Verfahren zur Kontrolle des Zustandes einer langgestreckten Schale zu entwickeln, welches die Möglichkeit bietet, integrale Charakteristiken der Oberfläche der langgestreckten Schale elementweise zu ermitteln und anschliessend diese Charakteristiken zwecks eindeutiger Bewertung des Zustandes der Oberfläche der langgestreckten Schale bei Einwirkungen von äusseren Belastungen auf dieselbe zusammenzusetzen, wodurch eine erhöhte Genauigkeit bei der Kontrolle der Flächengeometrie der langgestreckten Schale und damit eine erhöhte Genauigkeit der Kontrolle des gespannten und verformten Zustandes dieser Schale im Raum gewährleistet wird.

Das Wesen der Erfindung besteht darin, dass das Verfahren zur Kontrolle des Zustandes einer langgestreckten Schale folgende Verfahrensschritte beinhaltet, die in der angegebenen Reihenfolge durchgeführt werden: eine lange Leitung zur Wellenenergieübertragung gewählt wird, über die die Fortpflanzung von Signalen in Form von Moden mit bekannter räumlich-zeitlicher Struktur physikalischer Felder gewährleistet wird, die so gewählte lange Wellenenergie-Übertragungsleitung auf der Oberfläche der langgestreckten Schale längs vorgegebener Koordinate S angeordnet wird, in der langen Wellenenergie-Übertragungsleitung mindestens ein Bezugskanal und mindestens ein Messkanal mit bekannten Verzögerungszeiten der Modephasengeschwindigkeiten in jedem dieser Kanäle abgesondert werden, längs der langen Wellenenergie--Übertragungsleitung eine gerichtete Wechselwirkung der Wellenenergie der Modenfelder mindestens eines Bezugssignalkanals und wenigstens eines Messkanals in Abhängigkeit von der Änderung der Flächengeometrie der langgestreckten Schale gewährleistet wird, um im Messkanal ein Signal zu erhalten, das während der Fortpflanzung des Signals im Bezugssignalkanal entsprechend der Änderung der den Zustand dieser Schale charakterisierenden Flächengeometrie der langgestreckten Schale geändert wird, das in der Zeit modulierte Bezugssignal als Schwingungen physikalischer Felder gebildet wird, und diese Schwingungen in ein Signal mit vorgegebener räumlich-zeitlicher Struktur der Modenfelder umgeformt werden, die Modenfelder an den Ausgängen mindestens eines Bezugssignalkanals und wenigstens eines Messkanals der langen Wellenenergie-Übertragungsleitung in elektrische, nur von der Zeit abhängige Signale umgewandelt werden, die Amplitude des elektrischen Signals am Ausgang des Bezugssignalkanals abgetrennt wird, wobei das elektrische Signal am Ausgang des Messkanals umgekehrt proportional der Amplitudengrösse des elektrischen Signals am Ausgang des Bezugssignalkanals verstärkt wird, eine lineare Masstabtransformation benutzt wird, welche die Grösse der Verzögerungszeitdifferenz der Modephasengeschwindigkeiten im Bezugssignalkanal und im Messkanal der langen Wellenenergie-Ubertragungsleitung mit der laufenden Zeit der Kontrolle und mit der Ablesung der Werte der vorgegebenen Koordinate längs der langen Wellenenergie-Ubertragungsleitung verknüpft, und danach die Flächengeometrie der langgestreckten Schale bestimmt wird, erfindungsgemäss die erforderliche Auflösung der Kontrolle nach dem Flächeninhalt der Oberfläche der langgestreckten Schale vorgegeben wird, die Oberfläche der letzteren in Abschnitte beliebiger Form aufgeteilt wird, wobei der Flächeninhalt jedes von diesen Abschnitten geringer oder gleich dem durch die Auflösung der Kontrolle des Zustandes der langgestreckten Schale festgelegten Flächeninhalt ist, die auf der Oberfläche der langgestreckten Schale angeordnete lange Wellenenergie-Ubertragungsleitung über die Umfänge aller ausgewählten Abschnitte hinweg gelegt und auf den Umfängen dieser Abschnitte auf der Oberfläche der langgestreckten Schale befestigt wird, längs der langen Wellenenergie- -Ubertragungsleitung eine gerichtete Wechselwirkung der Wellenenergie der Modenfelder mindestens eines Bezugssignalkanals und wenigstens eines Messkanals in Abhängigkeit von der Krümmung der Längsachse der langen Wellenenergie-Ubertragungsleitung gewährleistet wird, Werte der Flächenkrümmung der langgestreckten Schale längs der vorgegebenen Koordinate S in Richtung der die Längsachse der langen Wellenenergie-Ubertragungsleitung schneidenden Normalen zu dieser Oberfläche ermittelt werden, und aufgrund der erhaltenen Krümmungswerte der Oberfläche der langgestreckten Schale Anfangswerte der zwei Hauptkrümmungen für jeden ausgewählten Abschnitt gefunden und festgehalten werden, welche dem Ausgangszustand der langgestreckten Schale entsprechen, worauf zwei laufende Werte der Hauptkrümmungen für jeden Abschnitt ermittelt und durch Vergleich dieser laufenden Werte der Hauptkrümmungen mit den festgehaltenen Anfangswerten der Hauptkrümmungen integrale Charakteristiken für jeden Abschnitt bei der Bestimmung der Flächengeometrie der langgestreckten Schale gefunden werden.

Die Erfindung bietet die Möglichkeit, den Prüfaufwand bei Festigkeits- und Dauerfestigkeitsprüfungen von Flugzeugrümpfen und -flächen, Schiffskörpern, Schutzdecken für Bauwerke um einige zehn Male dadurch herabzusetzen, dass die Montage von kostspieligen komplizierten Ausrüstungen entfällt und das Bedienungspersonal verringert wird. Durch Verwendung der Erfindung können Verluste vermieden werden, die durch Zerstörung von Baukonstruktionen, insbesondere von metallischen Dachhäuten entstehen, weil unkontrollierbare Belastungen der Dachhaut der Industriebetriebe oft zu deren Einsturz führen. Darüber hinaus gestattet die Erfindung es, die Baukosten für verschiedene schalenförmige Konstruktionen dadurch zu senken, dass die Anzahl von aufzustellenden Hilfsstützen bei Gewährleistung einer sicheren Kontrolle des Zustandes der Oberfläche der Schale mit hoher Auflösung über die Fläche reduziert wird. Es ist auch möglich, die Effektivität der Benutzung von Funkmess-, Nachrichtenantennen und Radioteleskopen bei genauer Bestimmung ihrer Flächengeometrie wesentlich zu erhöhen.

Kurze Beschreibung der Zeichnungen

Im folgenden wird die Erfindung an Hand eines konkreten Ausführungsbeispiels, das die Durchführbarkeit der vermutlichen Erfindung belegt, unter Bezugnahme auf die beigefügten Zeichnungen näher erläutert. Es zeigen:

Fig. I eine zu kontrollierende langgestreckte Schale mit einer auf ihrer Oberfläche befestigten langen Wellenenergie-Ubertragungsleitung in axonometrischer Darstellung gemäss der Erfindung;

Fig. 2 einen rechteckigen Flächenabschnitt der zu kontrollierenden langgestreckten Schale mit einer auf dessen Oberfläche über den Umfang hinweg befestigten langen Wellenenergie-Ubertragungsleitung in vergrössertem Masstab gemäss der Erfindung;

Fig. 3 die grafische Abhängigkeit der Flächenkrümmung der langgestreckten Schale über den Umfang des ausgewählten Abschnittes längs der vorgegebenen Koordinate S gemäss der Erfindung;

Fig. 4 ein Strukturschaltbild einer erfindungsgemässen Einrichtung zur Kontrolle des Zustandes einer langgestreckten Schale.

Bevorzugte Ausführungsform der Erfindung

In Fig. I ist eine langgestreckte Schale I gezeigt,

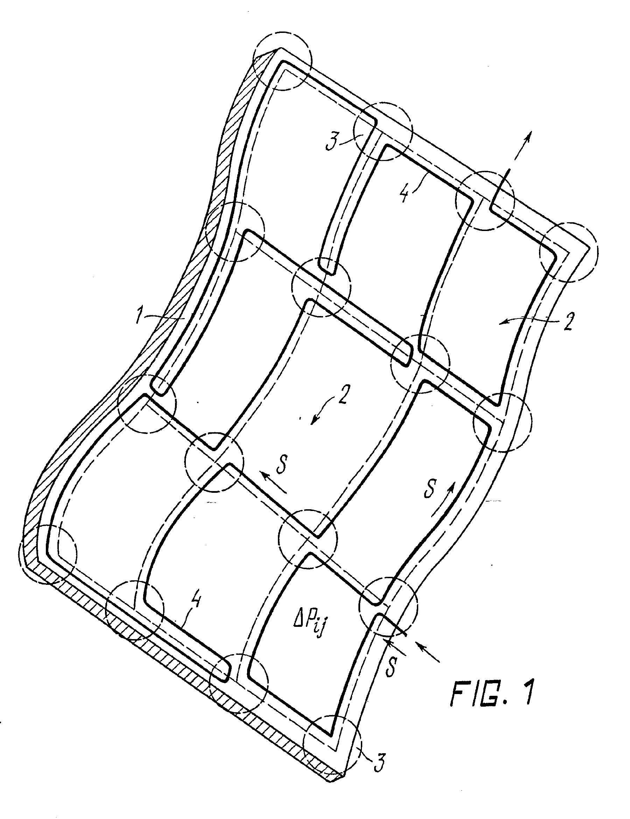

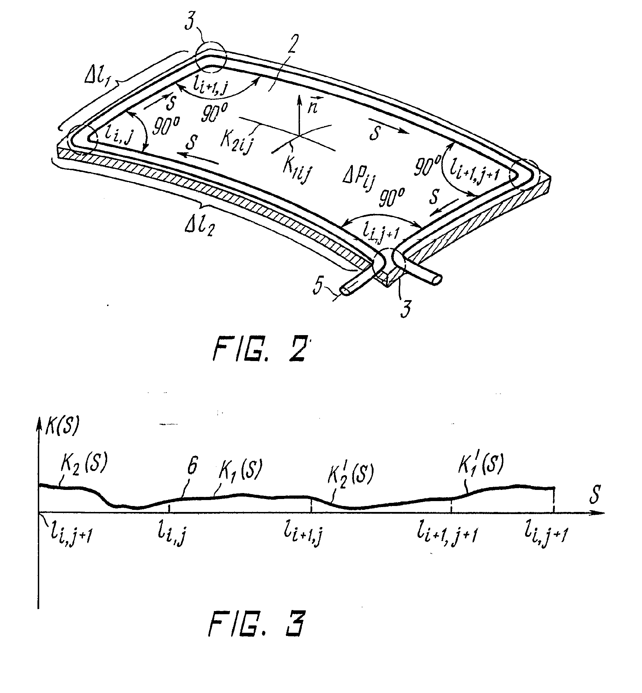

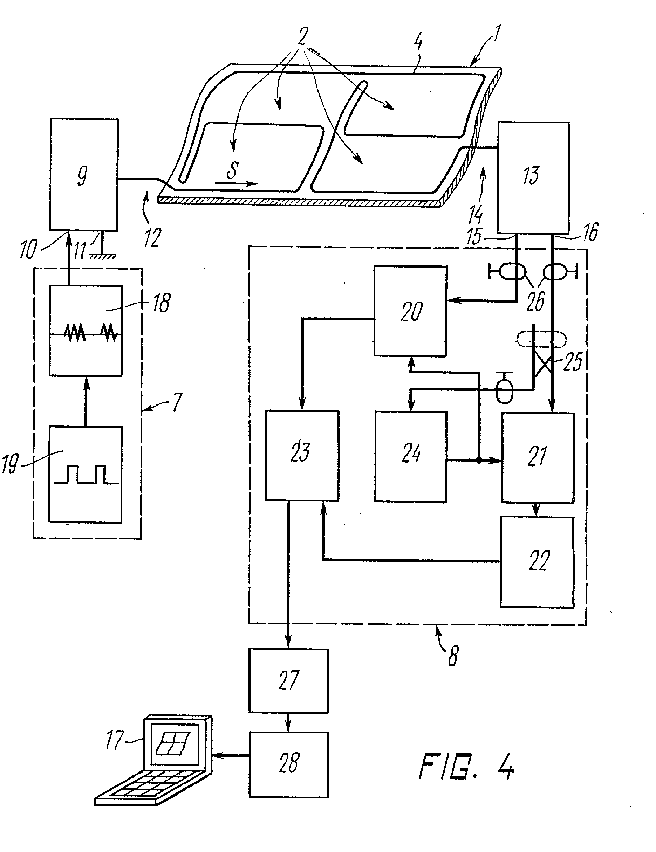

deren Oberfläche in Abschnitte 2 aufgeteilt sind, die ge= strichelt angedeutet sind und von denen jeder vier Knoten= zonen 3 aufweist. Durch die Knotenzonen 3 verläuft längs der vorgegebenen Koordinate S eine lange Wellenenergie- -Übertragungsleitung 4, die auf der Oberfläche der langge= streckten Schale I befestigt ist. Der Flächeninhalt jedes ausgewählten Abschnittes 2 ist geringer oder gleich einem Flächeninhalt, der durch die Auflösung der Kontrolle des Zustandes der langgestreckten Schale I festgelegt wird und mit $\Delta P_{ij}$ bezeichnet ist. Auf der Oberfläche des Abschnit= tes 2 (Fig. 2) sind die lange Wellenenergie-Übertragungs= leitung 4 mit Längsachse 5, zwei Hauptkrümmungen $K_{1ij}$, $K_{2ij}$ und eine Normale $\vec{n}$ zur Oberfläche der Schale sowie Rechtwinkel zwischen den in jeder Knotenzone 3 zu einem gemeinsamen Punkt gehenden und anliegenden Abschnitten der langen Wellenenergie-Übertragungsleitung 4 und eine Rich= tung für die Ablesung der vorgegebenen Bogenkoordinate S gezeigt, die entlang der Längsachse 5 der langen Wellen= energie-Übertragungsleitung 4 gerichtet ist.

Die durch Kreise in Fig. I und 2 angedeuteten Mittel= punkte sind jeweils mit $\ell_{ij}$, $\ell_{i+I,j}$, $\ell_{i+I,j+I}$, $\ell_{i,j+I}$ bezeichnet. Die Abstände zwischen den Paaren be= nachbarter Knotenzonen 3 längs der langen Wellenübertra= gungsleitung 4 sind mit $\Delta \ell_I$ und $\Delta \ell_2$ bezeichnet. Der Flä= cheninhalt des Abschnittes 2 kann nach folgender Beziehung ermittelt werden:

$$\Delta P_{ij} = \Delta \ell_I \cdot \Delta \ell_2 \; .$$

In Fig. 3 ist ein Diagramm 6 für die Krümmung $K(S)$ über den Umfang eines ausgewählten Abschnittes 2 der lange= streckten Schale I hinweg gezeigt, die mit Hilfe der langen Wellenenergie-Übertragungsleitung 4 gemessen ist. Für den ausgewählten Abschnitt 2 der langgestreckten Schale I wer= den die Messungen der Krümmung $K(S)$ nach den Normalen zu der Oberfläche der langen Schale I vorgenommen, welche die Längsachse 5 dieser Leitung 4 schneiden.

Die Einrichtung zur Durchführung des Verfahrens zur Kontrolle einer langgestreckten Schale I enthält eine Quelle 7 (Fig. 4) modulierter Wellenenergie, eine lange Wellenener= gie-Übertragungsleitung 4, die im Kontrollbereich der lang= gestreckten Schale I längs der vorgegebenen Koordinate S ange=

ordnet und für die Erfassung und Übertragung von Informationen über Änderungen der Flächengeometrie der langgestreckten Schale I bestimmt ist, die der Geometrie der Längsachse 5 der Leitung 4 entspricht. Die lange Wellenenergie-Übertragungsleitung 4 ist als Multimode-Wellenleiter mit mindestens einem Bezugssignalkanal und mit wenigstens einem Messkanal, die in Abhängigkeit von der Änderung der Geometrie der langgestreckten Schale miteinander zusammenwirken, ausgebildet.

Die Einrichtung zur Kontrolle des Zustandes einer langgestreckten Schale enthält einen Block 8 zur Analogverarbeitung von Informationen, der zur Abtrennung eines durch die Wellenenergie-Übertragungsleitung 4 umgewandelten Bezugssignals von dieser Leitung 4 dient, das zur Bestimmung von Charakeristiken des gespannten und verformten Zustandes der langgestreckten Schale I herangezogen wird, sowie ein Raumwellenfilter 9, durch das ein Bezugssignal mit räumlich-zeitlicher Struktur vorgegebener Mode erzeugt wird, wobei dieses Filter zwischen dem Ausgang der Quelle 7 modulierter Wellenenergie und der langen Wellenenergie-Übertragungsleitung 4 geschaltet ist. Das Raumwellenfilter 9 weist Eingänge IO, II auf, wobei das Gebiet, wo das Raumwellenfilter 9 mit der langen Wellenenergie-Übertragungsleitung 4 gekoppelt ist, mit I2 bezeichnet ist.

Die Einrichtung zur Kontrolle des Zustandes einer länglichen Konstruktion enthält ein Raumwellenfilter I3, das für die Umwandlung des vom Ausgang der langen Wellenenergie-Übertragungsleitung 4 erhaltenen Signals räumlich-zeitlicher Modenstruktur in ein zeitabhängiges Signal bestimmt ist. Das Filter I3 ist mit der langen Leitung 4 über ein Gebiet I4 gekoppelt und zwischen der langen Leitung 4 und den Eingängen des Blocks 8 zur Analogverarbeitung von Informationen geschaltet. Das Raumwellenfilter I3 hat Ausgänge I5 und I6.

Die Raumwellenfilter 9, I3 sind identisch ausgeführt und können in an sich bekannter Weise je nach Typ der langen Wellenenergie-Übertragungsleitung 4 realisiert werden. Falls die Leitung 4 z.B. als Rechteckhohlleiter ausgebildet ist und als Bezugssignal- und Messkanal $H_{IO}$-, $H_{20}$-Wellen verwendet werden, stellt das Filter 9 oder I3 eine an den

Hohlleiter in Reihe geschaltete 3dB-Schlitzbrücke (nicht gezeigt) dar, deren Brückenzweige an den Hohlleiter über zwei statische Phasendreher mit einer Differentialphasen-verschiebung von $\pi/2$ angeschlossen sind. Für den optischen Bereich sind die Ausführungsvarianten und Prinzipien zum Aufbau von Raumwellenfiltern in der Abhandlung J. of the Optical society of America, No 60, No 9, 1980, N.S.Kapany, et al. "Fiber optica. XII. A technique for launching an arbitrary mode on an optical dielectric waveguide, p. II82 beschrieben.

Die Einrichtung zur Kontrolle des Zustandes einer langgestreckten Schale enthält ausserdem ein Videoterminal I7, das zur Darstellung der Flächengeometrie der langgestreckten Schale und der erhaltenen Charakteristiken des gespannten und verformten Zustandes dieser Schale dient, wobei der Eingang des Videoterminals mit dem Ausgang des Blocks 8 zur Analogverarbeitung von Informationen elektrisch verbunden ist.

Die Quelle 7 modulierter Wellenenergie weist einen Generator I8, dessen Ausgang mit dem Eingang des Raumwellenfilters 9 in Verbindung steht, und einen Modulator I9 auf, dessen Ausgang an den Eingang des Generators I8 gelegt ist.

Als Quelle 7 modulierter Wellenenergie kann ein Standardgenerator zur Erzeugung von Schwingungen eines physikalischen Feldes - ein Laser (optischer Maser)-, ein UHF-Generator, ein Generator elastischer Schwingungen in Frage kommen.

Der Block 8 zur Analogverarbeitung enthält Detektoren 20, 2I, deren erste Eingänge mit dem Ausgang I5 bzw. I6 des Raumwellenfilters I3 verbunden sind, einen Integrator 22, einen Operationsverstärker 23, dessen erster Eingang an den Ausgang des Integrators 22 geschsltet ist und dessen Ausgang mit dem Eingang des Videoterminals I7 in elektrischer Verbindung steht. Der Eingang des Integrators 22 ist an den Ausgang eines Synchrondetektors 2I angeschlossen, der zweite Eingang des Operationsverstärkers 23 liegt am Ausgang des Synchrondetektors 20. Der Block 8 ist mit einem Überlagerungsoszillator 24 versehen, dessen Ausgang mit dem zweiten Eingängen der Synchrondetektoren 20, 2I verbunden ist.

Die Einrichtung zur Kontrolle des Zustandes einer länglichen Konstruktion enthält einen Richtkoppler 25, der zur Synchronisierung des Überlagerungsoszillators 24 dient. Der Ausgang des Richtkopplers 25 ist mit dem Eingang des Überlagerungsoszillators 24 verbunden. Jede Kopplung des Raumwellenfilters 13 mit den Synchrondetektoren 20, 21 ist von einer geerdeten Abschirmung 26 umschlossen.

Die Einrichtung zur Kontrolle des Zustandes einer länglichen Konstruktion enthält einen Analog-Digital-Umsetzer 27, dessen Eingang am Ausgang des Blocks 8 zur Analogverarbeitung von Informationen liegt, einen Mikroprozessor 28, dessen Ausgang an den Eingang des Videoterminals 17 angeschlossen ist.

Die Einrichtung zur Kontrolle des Zustandes einer langgestreckten Schale funktioniert wie folgt. Als zu kontrollierender Parameter, durch den der Zustand der langgestreckten Schale 1 (Fig. 4) gekennzeichnet wird, ist im vorliegenden Realisierungsbeispiel eine alternierende Verteilung der Krümmung der Oberfläche dieser Schale 1 längs der vorgegebenen Bogenkoordinate S gewählt. Mit der langgestreckten Schale 1 ist die lange Wellenenergie-Übertragungsleitung 4 starr verbunden, in der eine Störung regulärer Wellenvorgänge durch Verformungen der Oberfläche der langgestreckten Schale 1 stattfindet.

Am Anfang der Kontrolle liefert der Modulator 19 eine Folge von Impulsen, durch welche die Schwingungen des Generators 18 moduliert werden. Die Dauer und Periode der Modulationsimpulse werden durch die gewünschten Kontrollparameter - den dynamischen Kontrollbereich und das Auflösungsvermögen der Kontrolle- sowie durch die Parameter der langen Wellenenergie-Übertragungsleitung 4 festgelegt. Am Ausgang des Generators 18 wird eine Impulsfolge kohärenter Schwingungen, z.B. eines elektromagnetischen UHF-Feldes erzeugt. Diese Folge kohärenter Schwingungen gelangt zum Eingang des Raumwellenfilters 9. In diesem Filter 9 erfolgt eine solche Umwandlung der räumlichen Struktur des UHF-Feldes, dass im Gebiet 12 diese Struktur der gewünschten Struktur der Modenfelder des abgesonderten Bezugssignalkanals der langen Leitung 4 entspricht. Dadurch wird ein Bezugssignal gebildet und dieses in die Leitung 4 geschickt.

Bei der Fortpflanzung dieses Signals über den Bezugssignalkanal erregt es an den Biegestellen der langen Wellenenergie-Übertragungsleitung 4 im Messkanal Impulse, die ein Messignal bilden, das zum Bezugssignal kohärent ist. Diese Impulse breiten sich über den Messkanal mit einer Geschwindigkeit aus, die von der Ausbreitungsgeschwindigkeit des Bezugssignals verschieden ist.

Die UHF-Modenfelder des Bezugs- und des Messignals werden, nachdem sie das Gebiet I4 passiert haben, mit Hilfe des Filters I3 im Raum getrennt und an dessen Wellenenergie-Ausgänge I5, I6 geliefert. Diese Ausgänge I5, I6 sind mit den Eingängen des Blockes 8 zur Analogverarbeitung von Informationen verbunden. Das Mess- und das Bezugssignal gelangen also zum Block 8. Dann wird das Messignal dem ersten Eingang des Synchrondetektors 20 und das Bezugssignal dem Eingang des Richtkopplers 25, der einen gewissen kleinen Teil der Bezugssignalenergie zwecks Synchronisierung des Überlagerungsoszillators 24 abzweigt, zugeführt. Der übrige Energieteil wird an den ersten Eingang des Synchrondetektors 2I angelegt. Zugleich wird auf die zweiten Eingänge der Synchrondetektoren 20, 2I ein Signal des Überlagerungsoszillators 24 gegeben, das ein zum Bezugssignal kohärentes UHF-Feld darstellt, so dass eine synchrone Demodulation der UHF-Felder (unter Beibehaltung des Vorzeichens der Hüllkurve der UHF-Impulse des Messignals) erfolgt. An den Ausgängen der Synchrondetektoren 20, 2I erscheinen somit elektrische Signale. Dabei ist das am Ausgang des Synchrondetektors 2I erscheinende Signal proportional der Hüllkurve des Bezugssignals, während das Signal am Ausgang des Synchrondetektors 20 unter Berücksichtigung des Vorzeichens proportional der Hüllkurve des Messignals ist, das seinerseits eine Abbildung der Verteilung von Zuwächsen der Krümmung längs der vorgegebenen Koordinate S der Oberfläche der langgestreckten Schale I ist.

Die elektrischen Impulse des Bezugssignals vom Ausgang des Synchrondetektors 2I kommen am Eingang des Integrators 22 an, an dessen Ausgang ein elektrisches Signal gebildet wird, welches der Amplitude des Eingangsimpulssignals entspricht. Das Signal der Integralamplitude wird vom Integrator 22 dem ersten Eingang des Operationsverstärkers 23 zugeführt. Dem zweiten Eingang des Operationsverstärkers 23 wird ein Signal vom Ausgang des Synchrondetektors 20 zugeleitet. Vom Ausgang des Operationsverstärkers 23 wird ein elektrisches Signal abgenommen, dessen Wert nur durch den Integralwert bestimmt wird, der sich aus Zuwächsen der Krümmung der Oberfläche der langgestreckten Schale I ergibt, und nicht von den Grössen des Bezugssignals am Eingang IO des Raumwellenfilters 9 und am Ausgang I6 des Raumwellenfilters I3 abhängt. Vom Ausgang des Operationsverstärkers 23 wird das der Verteilung der Krümmung der Oberfläche der langgestreckten Schale längs der Wellenenergie-Ubertragungsleitung 4 entsprechende und als Ausgangssignal des Blocks 8 zur Analogverarbeitung diendende elektrische Signal mit Hilfe des Analog-Digital-Umsetzers 27 in einen Digitalkode umgesetzt und dem Eingang des Mikroprozessors 28 zugeführt. Für jedes ausgewählte Flächenelement 2 der langgestreckten Schale I, dessen Flächeninhalt $\Delta P_{ij}$ (Fig. 2) geringer oder gleich dem durch das Auflösungsvermögen der Kontrolle des Zustandes der langgestreckten Schale festgelegten Flächeninhalt entsprechend der gemessenen Verteilung der Krümmung K(S) über den Umfang hinweg gewählt wird, ermittelt man Werte der zwei Hauptkrümmungen im Ausgangszustand, z.B. im verformungsfreien Zustand der langgestreckten Schale I. Die aus den so erhaltenen Werten der zwei Hauptkrümmungen für jedes ausgewählte Flächenelement 2 der langgestreckten Schale zusammengesetzte Komposition, welche dem Ausgangszustand der langgestreckten Schale I entspricht, wird in den Speicher des Mikroprozessors 27 eingespeichert. Dann ermittelt man zwei laufende Hauptkrümmungen für jedes ausgewählte Flächenelement, das aber zur bereits belasteten langgestreckten Schale I gehört. Alsdann wird die für den belasteten Zustand dieser Schale I erhaltene Komposition im Mikroprozessor 28 mit der Komposition der dem Ausgangszustand der langgestreckten Schale I entsprechenden Hauptkrümmungen verglichen. Aufgrund der durch Vergleich der Kompositionen erhaltenen Ergebnisse findet man integrale Charakteristiken für jeden Abschnitt bei der Bestimmung der Flächengeometrie der langgestreckten Schale I und ermittelt folglich einen gespannten und verformten Zustand derselben. Diese Charakteristiken werden in digitaler oder grafischer Form aufgrund der vom Ausgang des Mikroprozessors 28 eintreffenden Digitalsignale auf dem Videoterminal I7 dargestellt.

Die Verfahrensschritte zur Absonderung eines Abschnittes 2 der langgestreckten Schale I (Fig. I, 2) werden durch Auswahl eines rechteckigen Abschnittes 2 mit vier Knotenzonen 3 auf der Oberfläche dieser Schale I veranschaulicht. Der Flächeninhalt $\Delta P_{ij}$ (Fig. 2) des rechteckigen Abschnittes 2 wird durch den Ausdruck

$$\Delta P_{ij} = \Delta \ell_I \cdot \Delta \ell_2$$

definiert, wobei

$$\Delta \ell_I = \ell_{i+I,j} - \ell_{i,j} = \ell_{i,j+I} - \ell_{i+I,j+I};$$

$$\Delta \ell_2 = \ell_{i+I,j+I} - \ell_{i+I,j} = \ell_{i,j} - \ell_{i,j+I}$$ sind. Hierin bedeuten $\ell_{i,j}$, $\ell_{i+I,j}$, $\ell_{i,j+I}$, $\ell_{i+I,j+I}$ Koordinaten der Mittelpunkte der Knotenzonen 3 mit zugehörigen Indizes.

Für diesen Abschnitt 2 werden integrale Hauptcharakteristiken, d.h. Werte der zwei Hauptkrümmungen $K_{Iij}$, $K_{2ij}$ auf der Oberfläche des Abschnittes 2 nach den Werten der Krümmung K(S) der langen Wellenenergie-Übertragungsleitung 4 längs der vorgegebenen Koordinate S entsprechend den Formeln

$$\tilde{K}_{Iij} = \frac{I}{\Delta \ell_I}\left( \int_{1_{i,j}}^{1_{i+I,j}} K_I(S)dS - \int_{1_{i,j+I}}^{1_{i+I,j+I}} K_I^I(S)dS \right),$$

$$\tilde{K}_{2ij} = \frac{I}{\Delta \ell_2}\left( \int_{1_{i,j}}^{1_{i,j+I}} K_2(S)dS - \int_{1_{i+I,j}}^{1_{i+I,j+I}} K_2^I(S)dS \right),$$

ermittelt, worin S eine vorgegebene Bogenkoordinate, die entlang der Längsachse der langen Wellenenergie-Übertragungsleitung 4 gerechnet wird, $K_I(S)$, $K_I^I(S)$, $K_2(S)$, $K_2^I(S)$ durch die lange Wellenenergie-Übertragungsleitung 4 gemessene Verteilungen der Krümmung nach den die Längsachse 5 dieser Leitung 4 schneidenden Normalen zur Oberfläche des Abschnittes 2, für die Umfangsseiten des Abschnittes 2 be-

deuten.

Der Flächeninhalt $\Delta P_{ij}$ des abgesonderten (ausgewählten) Abschnittes 2 muss gleich oder geringer als der Flächeninhalt des vorgegebenen Auflösungsvermögens für die Kontrolle des Zustandes der langgestreckten Schale I sein. Eine solche Kontrolle richtet sich nach den praktischen Forderungen an die Kontrolle realer Objekte und wird für eine langgestreckte Schale, die durch den Flächeninhalt ihrer Oberfläche gekennzeichnet wird, der Forderung hinsichtlich des vorgegebenen minimalen zu kontrollierenden Flächeninhaltes gerecht.

Nach der Ermittlung der zwei Anfangswerte der Hauptkrümmungen $\widetilde{K}^o_{Iij}$, $\widetilde{K}^o_{2ij}$ der Oberfläche des Abschnittes 2 für den (verformungsfreien) Ausgangszustandes der langgestreckten Schale und nach der anschliessenden Ermittlung der laufenden Werte $\widetilde{K}_{Iij}$ und $\widetilde{K}_{2ij}$ der zwei Hauptkrümmungen für den gleichen Abschnitt 2 lässt sich eine andere wichttige integrale Charakteristik, nämlich die relative Verformung $\delta_Z$ der Oberfläche des Abschnittes 2 in Richtung der Normale $\vec{n}$ (Fig. 2) nach der in der Mechanik der Schalen allgemeingültigen Beziehung

$$\delta_Z = (\widetilde{K}^o_{Iij} - \widetilde{K}_{Iij}) \Delta l_I + (\widetilde{K}^o_{2ij} - \widetilde{K}_{2ij}) \Delta l_2$$

ohne weiteres bestimmen.

Auf Grund von aus der Differentialgeometrie bekannten Formeln ermittelt man nach zwei Hauptkrümmungen der Oberfläche des Abschnittes 2 einen Winkel der Abweichung der Normale $\vec{n}$ von der (dem Ausgangszustand der langgestreckten Schale I entsprechenden) Ausgangsrichtung, welcher die Torsion der Oberfläche des Abschnittes 2 der langgestreckten Schale I charakterisiert, sowie die Änderung des Flächeninhaltes $\Delta P_{ij}$ dieses Abschnittes 2 infolge dessen Dehnung und Zusammendrückung.

Somit wird durch Realisierung der obenbeschriebenen Reihenfolge der Verfahrensschritte zur Absonderung eines Abschnittes 2 und zur Erhaltung seiner integralen Hauptcharakteristiken aufgrund des vom Ausgang des Analog-Digital-Umsetzers 27 (Fig. 4) eintreffenden Digitalkodes nach der Ermittlung und Festhaltung der Anfangswerte mit Hilfe des Mikroprozessors 28 und dann nach der Ermittlung der laufenden Werte der zwei Hauptkrümmungen für jeden ausgewählten Abschnitt 2 der langgestreckten Schale I eine Flächengeometrie jedes Abschnittes 2 der langgestreckten Schale I bestimmt. Nach der im Mikroprozessor 28 vorgenommenen Verknüpfung der Informationen über jeden Abschnitt 2 wird aufgrund der so erhaltenen Komposition mit Hilfe von konventionellen Beziehungen der Mechanik der Schalen der gespannte und verformte Zustand der langgestreckten Schale I ausgewertet. Die Ergebnisse der Auswertung, welche mit Hilfe des Videoterminals I7 dargestellt werden, bieten die Möglichkeit, Havarien zu verhindern und den Zustand der langgestreckten Schale I zu prognostizieren.

Somit ermöglicht die Erfindung eine hochpräzise Kontrolle des Zustandes der langgestreckten Schale mit äusserst vollständiger Abtrennung integraler Hauptcharakteristiken jedes ausgewählten Abschnittes und mit anschliessender Komposition (Vereinigung) dieser Charakteristiken zur Auswertung und Darstellung der Zustandscharakteristiken der gesamten Fläche der langgestreckten Schale.

## Gewerbliche Anwendbarkeit

Die Erfindung kann auf vielen Gebieten der Wissenschaft und Technik und in vielen Bereichen der industriellen Produktion benutzt werden, wo die Kontrolle des Zustandes langgestreckter Schalen erforderlich ist. Besonders zweckmässig ist die Anwendung der Erfindung

- im Bauwesen und bei der Nutzung von Gebäuden, architektonischen Bauwerken, besonderen schalenförmigen Baukonstruktionen;

- im Maschinenbau, Kraftfahrzeug-, Schiffs- und Flugzeugbau zur Kontrolle des gespannten und verformten Zustandes von Körpern bei deren Bau, Prüfung und Betrieb;

- in der Bergbauindustrie und Geologie zur Kontrolle der Flächengeometrie von Grubenbauen und Bergwerken;

- in der Medizin zur Überwachung des Zustandes von künstlichen schalenförmigen Organen;

- in der Radarmessung und im Nachrichtenwesen zur Kontrolle der Geometrie der Antennenoberfläche.

0344322

PATENTANSPRUCH

Verfahren zur Kontrolle des Zustandes einer langgestreckten Schale, bestehend darin, dass eine lange Leitung (4) zur Wellenenergie-Übertragung gewählt wird, über die die Fortpflanzung von Signalen in Form von Moden mit bekannter räumlich-zeitlicher Struktur physikalischer Felder gewährleistet wird, die so gewählte lange Wellenenergie-Übertragungsleitung (4) auf der Oberfläche der langgestreckten Schale (I) längs einer vorgegebenen Koordinate S angeordnet wird, in der Wellenenergie-Übertragungsleitung (4) mindestens ein Bezugssignalkanal und wenigstens ein Messkanal mit bekannten Verzögerungszeiten der Modephasengeschwindigkeiten in jedem dieser Kanäle abgesondert werden, längs der langen Wellenenergie-Übertragungsleitung (4) eine gerichtete Wechselwirkung der Wellenenergie der Modenfelder mindestens eines Bezugssignalkanals und wenigstens eines Messkanals in Abhängigkeit von der Änderung der Flächengeometrie der langgestreckten Schale (I) gewährleistet wird, um im Messkanal ein Signal zu erhalten, das während der Fortpflanzung des Signals entsprechend der Änderung der den Zustand dieser Schale charakterisierenden Flächengeometrie der langgestreckten Schale (I) geändert wird, das in der Zeit modulierte Bezugssignal als Schwingungen physikalischer Felder gebildet wird, und diese Schwingungen in ein Signal mit vorgegebener räumlich-zeitlicher Struktur der Modenfelder umgeformt werden, die Modenfelder an den Ausgängen mindestens eines Bezugssignalkanals und wenigstens eines Messkanals der langen Wellenenergie-Übertragungsleitung (4) in elektrische, nur zeitabhängige Signale umgewandelt werden, die Amplitude des elektrischen Signals am Ausgang des Bezugssignalkanals abgetrennt wird, wobei das elektrische Signal am Ausgang des Messkanals umgekehrt proportional der Amplitudengrösse des elektrischen Signals am Ausgang des Bezugssignalkanals verstärkt wird, eine lineare Masstabtransformation benutzt wird, welche die Grösse der Verzögerungszeitdifferenz der Modephasengeschwindigkeiten im Bezugssignalkanal und im Messkanal der langen Wellenenergie-Übertragungsleitung (4) mit der laufenden Zeit der Kontrolle und mit der Ablesung der Werte der vorgegebenen Koordinate längs der langen Wellenenergie-Ubertragungsleitung (4) verknüpft, und dann die Flächengeometrie der langgestreckten Schale (I) bestimmt wird, dadurch gekennzeichnet, dass eine erforderliche Auflösung der Kontrolle nach dem Flächeninhalt der Oberfläche der langgestreckten Schale (I) vorgegeben wird, die Oberfläche der langgestreckten Schale (I) in Abschnitte (2) beliebiger Form aufgeteilt wird, wobei der Flächeninhalt jedes von diesen Abschnitten geringer oder gleich dem durch die Auflösung der Kontrolle des Zustandes der langgestreckten Schale (I) festgelegten Flächeninhalt ist, die auf der Oberfläche der langgestreckten Schale (I) angeordnete lange Wellenenergie-Ubertragungsleitung (4) über die Umfänge aller ausgewählten Abschnitte (2) hinweg gelegt und auf den Umfängen dieser ausgewählten Abschnitte (2) auf der Oberfläche der langgestreckten Schale (I) befestigt wird, längs der langen Wellenenergie-Ubertragungsleitung (4) eine gerichtete Wechselwirkung der Wellenenergie der Modenfelder mindestens eines Bezugssignalkanals und wenigstens eines Messkanals in Abhängigkeit von der Krümmung der Längsachse (5) der langen Wellenenergie-Ubertragungsleitung (4) gewährleistet wird, Werte der Flächenkrümmung der langgestreckten Schale (I) längs der vorgegebenen Koordinate (S) in Richtung der die Längsachse (5) der langen Wellenenergie-Ubertragungsleitung (4) schneidenden Normalen zu dieser Oberfläche ermittelt werden, und aufgrund der erhaltenen Krümmungswerte der Oberfläche der langgestreckten Schale Anfangswerte der zwei Hauptkrümmungen $\widetilde{K}^o_{Iij}$, $\widetilde{K}^o_{2ij}$ für jeden ausgewählten Abschnitt (2) gefunden und festgehalten werden, welche dem Ausgangszustand der langgestreckten Schale (I) entspricht, worauf zwei laufende Werte der Hauptkrümmungen $\widetilde{K}_{Iij}$, $\widetilde{K}_{2ij}$ für jeden Abschnitt (2) ermittelt und durch Vergleich dieser laufenden Werte der Hauptkrümmungen $\widetilde{K}_{Iij}$, $\widetilde{K}_{2ij}$ mit den festgehaltenen Anfangswerten der Hauptkrümmungen $K^o_{Iij}$, $\widetilde{K}^o_{2ij}$ bei der Bestimmung der Flächengeometrie der langgestreckten Schale integrale Charakteristiken für jeden Abschnitt gefunden werden.

FIG. 1

FIG. 2

FIG. 3

FIG. 4

# INTERNATIONAL SEARCH REPORT

0344322

International Application No PCT/SU 88/00190

## I. CLASSIFICATION OF SUBJECT MATTER (If several classification symbols apply, indicate all)

According to International Patent Classification (IPC) or to both National Classification and IPC

IPC$^{-4}$: G 01 B 11/16, 11/26, 15/00

## II. FIELDS SEARCHED

| Minimum Documentation Searched 7 | |
|---|---|
| Classification System | Classification Symbols |
| IPC$^4$: | G 01 B 11/00, 11/16, 11/24, 11/26, 11/27, 15/00, 15/04, G 01 B 15/06 |

Documentation Searched other than Minimum Documentation
to the Extent that such Documents are Included in the Fields Searched 8

## III. DOCUMENTS CONSIDERED TO BE RELEVANT

| Category* | Citation of Document, 11 with indication, where appropriate, of the relevant passages 12 | Relevant to Claim No. 13 |
|---|---|---|
| A | US, A, 4459022 (UNITED TECHNOLOGIES CORPORATION), 10 July 1984, see column 1 lines 49-62, figure 1 | 1 |
| A | GB, B, 1293348 (SIRA INSTITUTE), 18 October 1972, see page 1, lines 10-23 | 1 |
| A | DE, A1, 2543377 (SIEMENS AG), 7 April 1977, see page 4 lines 3-8, figure 1 | 1 |
| A | DE, C3, 2134657 (DNEPROPETROWSKIJ GOSUDARSTWENNY UNIWERSITET), 2 May 1974, see claim 1 | 1 |
| A | CH, A5, 608098 (VEB CARL ZEISS JENA), 15 December 1978, see claim 1 | 1 |
| A | JP, B2, 58-24725, 23 May 1983, see figure 4 | |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 12 January 1989  (12.01.89) | 30 January 1989  (30.01.89) |
| International Searching Authority | Signature of Authorized Officer |
| ISA/SU | |

Form PCT/ISA/210 (second sheet) (January 1985)